# EUROPEAN PATENT SPECIFICATION

(11) **EP 0 427 372 B1**
(45) Date of publication and mention of the grant of the patent: **10.08.1994**
(21) Application number: 90306969.8
(22) Date of filing: 26.06.1990
(51) Int. Cl.: B60J 10/00

(54) **Automobile seal**
Kraftfahrzeugdichtungsprofil
Joint d'étanchéité pour véhicule automobile

(30) Priority: 06.11.1989 US 432400
(43) Date of publication of application: 15.05.1991
(73) Proprietor: GENCORP INC., Akron Ohio 44313 (US)
(72) Inventor: Warner, Douglas L., Marion, Indiana 46952 (US)
(74) Representative: Stoner, Gerard Patrick

(56) References cited:
- EP-A- 0 322 286
- DE-C- 3 523 409
- US-A- 3 333 364
- US-A- 4 143 497
- US-A- 4 348 443
- US-A- 4 830 898
- PATENT ABSTRACTS OF JAPAN vol. 10, no. 6 (M-445)(2063) 11 January 1986

## Description

The invention relates to automobile seals, in particular to seals suitable for use between the rear trunk (boot) compartment of an automobile and the decklid (bootlid) covering the compartment.

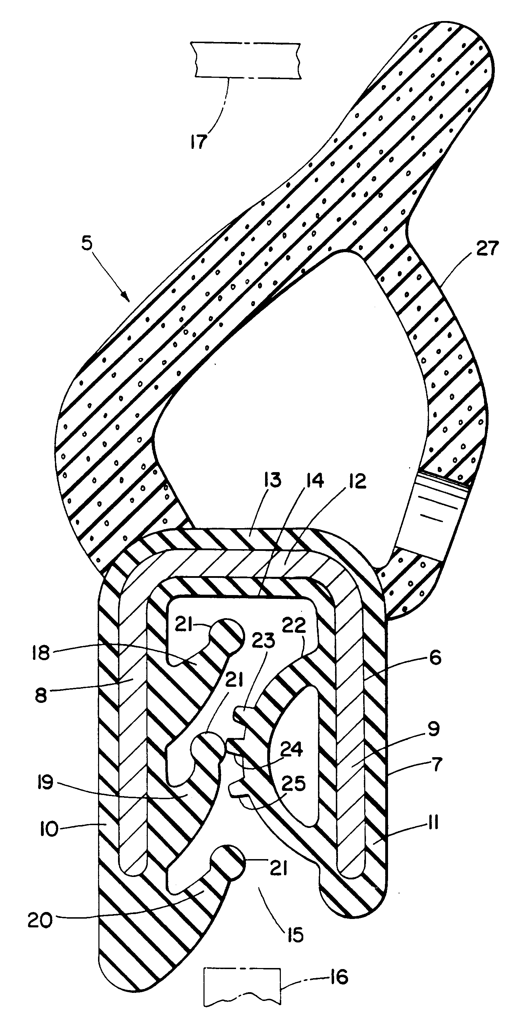

Certain decklid seals presently in use have a U-shaped channel which is like that shown in US-A-4,348,443 and US-A-4,143,497 in that a number of similarly designed resilient fingers are employed to grip an outstanding flange which extends around the trunk compartment. It has been found that in cases of severe curvature, e.g. 90° corners, the resilient fingers tend to collapse against each other and against the adjacent legs of the channel, somewhat like the fingers 21 shown in Figure 3 of US-A-4,830,898. This has an adverse effect on the seal which has been found to leak occasionally.

We provide a seal, preferably for a trunk (boot) lid or decklid, which comprises a U-shaped piece of metal embedded in, and coextensive with a similarly-shaped rubber channel which has a pair of legs connected by a web. Further, a plurality of resilient fingers extend inwardly of one of the legs in the direction of the other leg and of the web. On the other leg opposite the fingers, is a hollow half-moon or crescent-shaped bulbous portion which extends inwardly towards the opposing fingers. The bulbous portion is provided with a gripping means, preferably a number of outwardly extending nibs, which coact with the fingers to grip the outstanding flange of the trunk compartment and seal the spaces between the flange and legs of the rubber channel.

In the prior art, US-A-3,333,364 shows a rubber channel with hollow bulbous inward projections 32-34. However that is a glass-run channel and so the projections are incapable of gripping.

DE-C-3523409 discloses an automobile door seal which comprises a U-shaped channel having a couple of inwardly projecting fingers opposed to an asymmetric reinforced protuberance for attaching to a flange. Attached to the side of the channel is a soft rubber seal, for sealing against a part movable away from the flange.

The present invention provides an automobile trunk or boot seal comprising a metal reinforced rubber U-shaped channel for receiving and gripping an upstanding flange extending around a trunk or boot opening to mount the seal, a sponge rubber sealing bulb secured to the channel, for compressive sealing engagement against a part movable relative to the flange on which the seal is mounted, inboard and outboard opposing legs of the channel having resilient inward projections to grip the flange and comprising as seen in transverse cross-section
on the inboard leg a plurality of fingers extending from that leg towards the other leg and towards the base of the channel, and
on the outboard leg a hollow protuberance opposing the fingers, and having a grip portion for acting with the fingers to engage and grip the flange,
characterised in that
the sponge rubber sealing bulb is on the base of the channel, and
the hollow protuberance on the outboard leg is half-moon shaped.

Thus the present invention provides an automobile seal adapted for fitting an upstanding flange, for use as a trunk or boot seal.

Further developments in line with claim 1 are referred to in the dependent claims 2 to 8.

An embodiment of the invention is now described by way of example, with reference to the accompanying drawing which is a cross-section of a trunk lid seal strip 5. The seal 5 comprises a U-shaped metal reinforcement conduit 6 embedded in a similarly shaped resilient rubber channel 7, both of which are coextensive with the length of the seal 5 which has a substantially constant cross-sectional shape along its length.

The metal conduit 6 and rubber channel 7 have opposing parallel legs 8,9 and 10,11 which are connected by base webs 12 and 13 to form a metal reinforced rubber channel 7 which has a closed end or base 14 opposite an open end 15 which is designed to receive a metal flange 16, shown approaching in dotted line, which extends around the opening of the trunk compartment so as to follow the periphery of a trunklid or decklid 17 which is rotatable into and out of covering relation with the trunk (boot) compartment.

Leg 10 of the channel 7 is somewhat longer than leg 11 owing to an extension of its rubber portion. This is the inboard leg of the channel, i.e. towards the opening of the trunk compartment. Outboard leg 11 forms an exterior front of the trunk opening while the web 13 covers the end of the flange 16. A plurality of resilient tapering rubber fingers 18,19,20 (as seen in cross-section) extend at an incline from the inboard leg 10, towards the opposite leg 11 and inclined towards the base web 13. These extend continuously along the channel 7, forming a series of resilient ribs. In the embodiment shown, there are three of these finger-section ribs. Each has a similar solid, tapering cross-section with, at its extremity, a bulbous (parti-cylindrical) portion 21, and extends approximately half-way across the channel.

On the outboard leg 11 is formed a single, hollow half-moon or crescent-shaped resilient rubber protuberance or gripper 22. This projects towards the opposing fingers 18,19,20 sufficiently far to be able to grip the flange 16 securely against them. In the embodiment shown it extends far enough just to interfere with the middle finger rib 19. In this embodiment the protuberance 22 is the only inwardly-projecting feature on the outboard leg 11, and occupies a major proportion of the length of that leg. Its cross-section is substantially a circular segment, less than a semicircle. Like the ribs 18,19,20 it extends continuously longitudinally along the channel and hence forms a parti-cylindrical projection. On its outermost surface i.e. that part adjacent the fingers, the protuberance 22 has a plurality - three, in the embodiment shown - of solid projecting ribs, in cross-section nibs 23,24,25 to increase the gripping effect against the flange 16. The nib cross-section resembles that of a frusto-cone i.e. initially tapers away from the main gripper surface and has a flatter cut-off end surface (by contrast with the pointed ribs 16 seen in US-A-3,360,887).

The fingers 18,19,20, gripper protuberance 22 and its nibs 23,24,25 are integrally formed with the rubber channel 7 in one piece of rubbery material by extrusion.

On the outside of the base web 13 the seal has a hollow resilient sealing bulb 27 which extends in the direction generally away from the legs 10,11. The bulb 27 is made of a sponge rubber which is softer and more pliable than that of the flange-gripping channel 7, and may have any shape suitable for sealing against a decklid (bootlid) 17.

The seal described uses a novel combination of resilient fingers and a hollow gripper protuberance with nibs to provide improved gripping and sealing action which has been found substantially to eliminate leakage between the decklid and boot compartment. It has been found that the semi-cylindrical gripper 22 has less tendency to collapse than the resilient fingers used previously.

## Claims

1. An automobile trunk or boot seal comprising a metal reinforced rubber U-shaped channel (7) for receiving and gripping an upstanding flange extending around a trunk or boot opening to mount the seal, a sponge rubber sealing bulb (27) secured to the channel (7), for compressive sealing engagement against a part (17) movable relative to the flange on which the seal is mounted, inboard and outboard opposing legs (10,11) of the channel (7) having resilient inward projections to grip the flange and comprising as seen in transverse cross-section
on the inboard leg (10) a plurality of fingers (18,19,20) extending from that leg towards the other leg (11) and towards the base (13) of the channel, and
on the outboard leg (11) a hollow protuberance (22) opposing the fingers (18,19,20), and having a grip portion (23,24,25) for acting with the fingers to engage and grip the flange,
characterised in that
the sponge rubber sealing bulb (27) is on the base (3) of the channel, and
the hollow protuberance (22) on the outboard leg (11) is half-moon shaped.

2. An automobile seal according to claim 1 in which the grip portion of the protuberance (22) comprises nibs (23,24,25) projecting from the surface thereof towards the opposing fingers (18,19,20).

3. An automobile seal according to claim 2 in which there are three said nibs (23,24,25).

4. An automobile seal according to any one of claims 1, 2 and 3 in which the protuberance (22) and fingers (18,19,20) are formed integrally with the channel (7).

5. An automobile seal according to any one of the preceding claims in which there are three said fingers (18,19,20).

6. An automobile seal according to any one of the preceding claims in which the fingers (18,19,20) taper in thickness from the leg (10) towards the centre of the channel (7).

7. An automobile seal according to any one of the preceding claims in which each finger (18,19,20) terminates in an enlarged bulbous portion (21).

8. An automobile seal according to claim 2 in which each nib (23,24,25), in cross-section, tapers away from the surface of the protuberance (22) and has a flatter end portion.

## Patentansprüche

1. Kraftfahrzeugkofferraumdichtung umfassend einen metallverstärkten U-förmigen Gummikanal (7) zum Aufnehmen und Greifen eines aufrechten Flansches, der sich um eine Kofferraumöffnung erstreckt, um die Dichtung, einen am Kanal (7) befestigten Schaumgummi-Abdichtungswulst (27), zum Druckdichtungseingriff gegen einen Teil (17) zu montieren, der relativ zum Flansch, auf dem die Dichtung montiert ist, beweglich ist, wobei nach innen und außen gerichtete gegenüberliegende Seitenabschnitte (10, 11) des Kanals (7) elastische Innenvorsprünge zum Fassen des Flansches aufweisen und, wie im Querschnitt ersichtlich,
auf dem innenseitigen Seitenabschnitt (10) eine Vielzahl an Fingern (18, 19, 20), die sich von diesem Seitenabschnitt zum anderen Seitenabschnitt (11) und zur Basis (13) des Kanals erstrecken, und
auf dem außenseitigen Seitenabschnitt (11) einen hohlen Vorsprung (22) gegenüber den Fingern (18, 19, 20) umfassen und einen Greifabschnitt (23, 24, 25) zum Zusammenwirken mit den Fingern aufweisen, um in den Flansch einzugreifen und diesen zu fassen,
dadurch gekennzeichnet, daß
sich der Schaumgummi-Abdichtungswulst (27) auf der Basis (3) des Kanals befindet, und
der hohle Vorsprung (22) auf dem außenseitigen Seitenabschnitt (11) halbmondförmig ist.

2. Kraftfahrzeugdichtung nach Anspruch 1, worin der Greifabschnitt des Vorsprungs (22) Fortsätze (23, 24, 25) aufweist, die sich von dessen Oberfläche zu gegenüberliegenden Fingern (18, 19, 20) erstrecken.

3. Kraftfahrzeugdichtung nach Anspruch 2, worin drei genannte Fortsätze (23, 24, 25) vorhanden sind.

4. Kraftfahrzeugdichtung nach einem der Ansprüche 1, 2 und 3, worin der Vorsprung (22) und die Finger (18, 19, 20) einstückig mit dem Kanal (7) ausgebildet sind.

5. Kraftfahrzeugdichtung nach einem der vorhergehenden Ansprüche, worin drei genannte Finger (18, 19, 20) vorhanden sind.

6. Kraftfahrzeugdichtung nach einem der vorhergehenden Ansprüche, worin sich die Dicke der Finger (18, 19, 20) vom Seitenabschnitt (10) zum Mittelpunkt des Kanals (7) hin verjüngt.

7. Kraftfahrzeugdichtung nach einem der vorhergehenden Ansprüche, worin jeder Finger (18, 19, 20) in einem vergrößerten knollenförmigen Abschnitt (21) endet.

8. Kraftfahrzeugdichtung nach Anspruch 2, worin sich jeder Fortsatz (23, 24, 25) im Querschnitt von der Oberfläche des Vorsprungs (22) ausgehend verjüngt und einen flacheren Endabschnitt aufweist.

## Revendications

1. Joint d'étanchéité pour coffre à baggages ou coffre d'un véhicule automobile, comprenant un canal métallique en forme de U renforcé par du caoutchouc (7) pour recevoir et saisir un rebord debout s'étendant autour d'une ouverture de coffre à baggages ou de coffre pour monter le joint d'étanchéité, un bulbe d'étanchéité (27) en caoutchouc mousse fixé au canal (7), pour une mise en prise étanche par compression avec une partie (17) mobile relativement au rebord sur lequel le joint d'étanchéité est monté, des branches opposées interne et externe (10, 11) du canal (7) présentant des saillies élastiques orientées vers l'intérieur pour saisir le rebord et comprenant, vus en section transversale,
sur la branche interne (10) une pluralité de doigts (18, 19, 20) s'étendant de cette branche vers l'autre branche (11) et vers la base (13) du canal, et
sur la branche externe (11) une protubérance creuse (22) opposée aux doigts (18, 19, 20) et présentant une portion de saisie (23, 24, 25) pour agir avec les doigts afin de venir en prise et de saisir le rebord,
caractérisé en ce que
le bulbe d'étanchéité en caoutchouc mousse (27) se trouve sur la base (3) du canal, et
la protubérance creuse (22) sur la branche externe (11) est configurée en demi-lune.

2. Joint d'étanchéité pour véhicule automobile selon la revendication 1, dans lequel la portion de saisie de la protubérance (22) comprend des becs (23, 24, 25) faisant saillie de la surface de celle-ci vers les doigts opposés (18, 19, 20).

3. Joint d'étanchéité pour véhicule automobile selon la revendication 2, dans lequel on a prévu trois desdits becs (23, 24, 25).

4. Joint d'étanchéité pour véhicule automobile selon l'une des revendications 1, 2 et 3, dans lequel la protubérance (22) et les doigts (18, 19, 20) sont réalisés en une pièce avec le canal (7).

5. Joint d'étanchéité pour véhicule automobile selon l'une des revendications précédentes, dans lequel on a prévu trois desdits doigts (18, 19, 20).

6. Joint d'étanchéité pour véhicule automobile selon l'une des revendications précédentes, dans lequel l'épaisseur des doigts (18, 19, 20) diminue de la branche (10) vers le centre du canal (7).

7. Joint d'étanchéité pour véhicule automobile selon l'une des revendications précédentes, dans lequel chaque doigt (18, 19, 20) se termine par une portion bulbeuse agrandie (21).

8. Joint d'étanchéité pour véhicule automobile selon la revendication 2, dans lequel chaque bec (23, 24, 25) diminue en section transversale au loin de la surface de la protubérance (22) et présente une portion d'extrémité plus plate.
